# EUROPÄISCHE PATENTANMELDUNG

(11) **EP 1 916 396 A1**
(43) Veröffentlichungstag der Anmeldung: **30.04.2008**
(21) Anmeldenummer: 07115981.8
(22) Anmeldetag: 10.09.2007
(51) Int. Cl.: F02B 37/007, F02B 37/16, F02B 37/18, F02D 23/00

(54) **Registeraufladeeinrichtung**

(30) Priorität: 26.10.2006 DE 102006050629; 22.12.2006 DE 102006061345
(71) Anmelder: ROBERT BOSCH GMBH, 70442 Stuttgart (DE)
(72) Erfinder: Becker, Bodo, 83607, Holzkirchen (DE); Vogt, Guenther, 83607, Holzkirchen (DE)

(57) **Zusammenfassung**

Die Erfindung bezieht sich auf eine Registeraufladeeinrichtung mit einer ersten Registerstufe (22) mit einem ersten Verdichterteil (24) und einem ersten Turbinenteil (26) sowie einer zweiten Registerstufe (38) mit einem zweiten Verdichterteil (40) und einem zweiten Turbinenteil (42) zur Aufladung einer Verbrennungskraftmaschine (10), wobei der zweiten Registerstufe (38) ein Verdichterzuschaltventil (32) zugeordnet ist und dem zweiten Turbinenteil (42) ist ein Turbinenzuschaltventil (60) zugeordnet ist. Es wird vorgeschlagen, dass dem Verdichterteil (40) der zweiten Registerstufe (38) ein selbsttätig schaltendes Umblaseventil (52) parallel geschaltet ist und/oder dass dem Turbinenteil (42) der zweiten Registerstufe (38) ein selbsttätig schaltendes Waste-Gate-Ventil (44) parallel geschaltet ist.

## Beschreibung

### Stand der Technik

Die Erweiterung der Leistungsgrenzen einer Aufladeeinrichtung, wie zum Beispiel eines Abgasturboladers erfolgt zum Beispiel durch eine zweistufig geregelte Aufladung, wie sie aus dem Kraftfahrttechnisches Taschenbuch, Bosch, 23. Auflage, Vieweg, 1999, Seiten 445 bis 446 bekannt ist. Bei der zweistufig geregelten Aufladung sind zwei unterschiedlich große Abgasturbolader in Reihe geschaltet. Der Abgasmassenstrom strömt zunächst in eine Abgassammelrohrleitung. Von hier wird der Abgasmassenstrom über eine Hochdruckturbine expandiert. Bei großen Abgasmengen, wie sie bei hohen Drehzahlen der Verbrennungskraftmaschine auftreten, kann ein Teil des Abgasmassenstroms über einen Bypass um die Hochdruckturbine herumgeleitet werden. Anschließend wird der gesamte Abgasmassenstrom von einer der Hochdruckturbine nachgeschaltete Niederdruckturbine genutzt. Der angesaugte Frischluftmassenstrom wird zunächst durch eine Niederdruckstufe vorverdichtet und anschließend in der Hochdruckstufe weiter verdichtet. Idealerweise wird der Frischluftmassenstrom zwischen der Niederdruckstufe und der Hochdruckstufe zwischengekühlt.

Aus der Veröffentlichung der Firma Porsche AG in der Automobiltechnischen Zeitschrift, ATZ von 1996 Band 88 ab Seite 265 ist unter dem Titel "Der Porsche 959 - Gruppe B - ein besonderes Automobil - Teil 1" eine Registerturboladung bekannt, die verschiedene Steuer- und Regelorgane aufweist. Gemäß Seite 286 der Veröffentlichung ATZ Automobiltechnische Zeitschrift 88 (1986), 5 arbeitet die Porscheregisteraufladung mit zwei gleichen Turboladern. Der erste Turbolader ist über den gesamten Drehzahlbereich in Betrieb. Im Bereich niedriger Drehzahlen wird der Abgasstrom über diesen Lader geleitet. So kann dieser rasch seine Drehzahl erhöhen. Wenn bei höherer Drehzahl mehr Abgasenergie anfällt, wird der bereits vorher beschleunigte zweite Lader zusätzlich zur Aufladung herangezogen. Die Registeraufladung gemäß dieser Lösung verbindet gute Beschleunigung aus niedrigen Drehzahlen mit hoher Maximalleistung und günstigem Verbrauch. In einer ersten Stufe, einem unteren Drehzahlbereich entsprechend, erfolgt ein Hochlaufen der Aufladeeinrichtung im Einladerbetrieb. Das gesamte Abgas und die gesamte Ladeluft strömen über den ersten Abgasturbolader, bis der gewünschte Ladedruck erreicht wird. In diesem Betriebsmodus sind ein Turbinen- und ein Verdichterzuschaltventil geschlossen. Das Abgas einer Zylinderreihe strömt über ein Querrohr zum ersten Lader. Der weitere Lader ist noch nicht in Betrieb, ein als Bypassventil bezeichnetes Waste-Gate-Ventil bleibt geschlossen. Liegt im geregelten Einladerbetrieb der gewünschte Ladedruck vor und ist jedoch mehr Abgasenergie vorhanden als der Abgasturbolader für den Ladedruck benötigt, wird der Rest des Abgases über den weiteren Lader abgeblasen. Dabei wird der weitere Lader beschleunigt, das Waste-Gate-Ventil bleibt geschlossen und das Turbinenzuschaltventil regelt den Ladedruck. Durch das Hochlaufen des weiteren Laders beginnt der diesem zugeordnete Verdichter Luft zu fördern. Bei geschlossenem Verdichterzuschaltventil strömt die Luft über ein Entlüftungsventil beziehungsweise Umblaseventil vor den Verdichter des ersten Laders und wird von diesem angesaugt.

Können beide Abgasturbolader ab einer bestimmten Drehzahl ausreichend mit Abgasenergie versorgt werden, schaltet sich der weitere Lader zu. Mit dem vollständigen Öffnen des Turbinenzuschaltventils und dem Schließen eines Umblaseventils wird die Zuschaltung eingeleitet. Der Druck hinter dem Verdichterteil des weiteren Laders steigt stark an, so dass das Verdichterzuschaltventil öffnet. Die überschüssige Abgasenergie wird nun über das Waste-Gate-Ventil abgeblasen, welches von einem Unterdrucksteller betätigt ist. Sowohl das Umblaseventil als auch das Waste-Gate-Ventil werden über die Motorsteuerung angesteuert.

### Offenbarung der Erfindung

Die Steuerung und die Regelung des durch die zweistufige Registeraufladeeinrichtung erzielbaren Ladedrucks im Gesamtsystem "zweistufige Registeraufladung" erfolgt über ein Turbinenzuschaltventil, welches mit der Motorsteuerung in Verbindung steht. Das Verdichterzuschaltventil arbeitet wie im Stand der Technik vorzugsweise selbsttätig. In vorteilhafter Weise ist vorgesehen, dass der zweiten Registerstufe wenigstens ein weiteres selbsttätig schaltendes Ventil zugeordnet ist. So ist es vorteilhaft, wenn zumindest das der zweiten Registerstufe zugeordnete Umblaseventil oder ein der zweiten Registerstufe zugeordnetes Waste-Gate-Ventil als selbsttätig schaltende Ventile ausbildet sind. Besonders vorteilhaft ist es, wenn sowohl das Umblaseventil als auch das Waste-Gate-Ventil selbsttätig arbeiten, da dann mittels des Turbinenzuschaltventils allein über die Motorsteuerung eine Ladedruckregelung erfolgen kann. In der Motorsteuerung sind zur Ansteuerung eines Ventils Funktionserstellungen und nachfolgende Applikationen der Komponenten durch Erstellung und Bedaten von Kennlinien und Kennfeldern notwendig. Diese Aufwand kann durch die erfindungsgemäße Lösung vorteilhaft auf ein Minimum reduziert werden. Außerdem entfallen die für die Fremdsteuerung des Waste-Gate-Ventils und des Umblaseventils benötigten Leistungsendstufen und Steckkontakte am Gerätestecker des Motorsteuergeräts sowie die benötigten Steller. Es ist auch möglich nur das Umblaseventil selbsttätig schaltend auszubilden und das Waste-Gate-Ventil, welches dem Turbinenteil der zweiten Registerstufe zugeordnet wird, über die Motorsteuerung zu steuern, so dass über das Motorsteuergerät lediglich das Turbinenzuschaltventil als Stellglied sowie ein dem Turbinenteil der zweiten Registerstufe zugeordnetes Waste-Gate-Ventil zu bedienen ist. Besonders vorteilhaft ist es jedoch, wenn sowohl das Umblaseventil als auch das Waste-Gate-Ventil selbsttätig schaltend ausgebildet sind, da dann die erfindungsgemäß vorgeschlagene Lösung die Steuerung des Gesamtsystems "zweistufige Registeraufladung" lediglich über das durch diese betätigbare Turbinenzuschaltventil erlaubt.

Vorteilhafte Ausführungsformen und Weiterentwicklungen der Erfindung werden durch die in den abhängigen Ansprüchen aufgeführten Maßnahmen ermöglicht.

Bei einem Ausführungsbeispiel der erfindungsgemäß vorgeschlagenen Lösung wird an einer Verbrennungskraftmaschine, der zwei Aufladeeinrichtungen zugeordnet sind, bei denen es sich bevorzugt um Abgasturbolader handelt, weiterhin das Verdichterzuschaltventil vor den Verdichterteil der zweiten Registerstufe platziert. Dadurch wird vorteilhaft eine Ölabdichtung der Aufladeeinrichtung erzielt, da der Verdichterteil dieser zweiten Registerstufe immer unter der Ladedruckbeaufschlagung der ersten Registerstufe arbeitet und somit kein Unterdruck auf diese einwirkt, der Öl aus einem Lagergehäuse eines Lagers einer der Aufladeeinrichtungen in die Ladeluftleitung saugen würde.

Die erfindungsgemäß vorgeschlagene Registeraufladeeinrichtung umfasst neben dem Verdichterzuschaltventil und dem Umblaseventil vorzugsweise noch ein Waste-Gate-Ventil, mit welchem der Abgasmassenstrom sowohl um den Turbinenteil der zweiten Registerstufe herumgeleitet werden kann als auch eine Möglichkeit geschaffen wird, den Abgasmassenstrom innerhalb des Abgastraktes zu halten und zum Beispiel nachfolgend über das Turbinenzuschaltventil zu leiten. Dies eröffnet die Möglichkeit, die erste Registerstufe der zweistufig ausgeführten Registeraufladung mit dem gesamten Abgasmassenstrom zu beaufschlagen, auch dann, wenn die zweite Registerstufe durch Offenstehen eines Waste-Gate-Ventils im Bypass betrieben wird, d.h. der Abgasmassenstrom den Turbinenteil der zweiten Registerstufe umgeht.

Die erfindungsgemäß vorgeschlagene, zweistufig ausgestaltete Registeraufladung umfasst neben dem Verdichterzuschaltventil und dem Turbinenzuschaltventil ein Umblaseventil. Das Umblaseventil arbeitet vorzugsweise selbsttätig, ohne dass dessen Anbindung an die Motorsteuerung erforderlich ist. Das zur Verhinderung des wirkungsgradschädlichen und Bauteilfestigkeit beeinträchtigenden Verdichterpumpens eingesetzte Umblaseventil gewährleistet, dass das nach Passage der ersten Registerstufe sich langsam zuschaltende Turbinenteil der zweiten Registerstufe beim Öffnen des Turbinenzuschaltventils die Förderung des Luftmassenstroms aufnimmt, der aber noch nicht in die Brennräume der Verbrennungskraftmaschine gefördert werden kann, da die Verdichterstufe der ersten Registerstufe mit dem erzeugten Ladedruck dagegen steht und das Verdichterzuschaltventil noch nicht automatisch öffnen konnte. Um das Auftreten dieses Betriebszustandes zu verhindern, wird beispielsweise umzuleitende Ladeluft, welche über den Verdichterteil der ersten Registerstufe vorverdichtet wurde, aus einem Ladeluftkühler entnommen und über das Umblaseventil vor dem Eintritt des Verdichterteiles der zweiten Registerstufe wieder eingespeist. Der Verdichterteil der zweiten Registerstufe fördert für einen Übergangsbereich im Kreis. In vorteilhafter Weise wird das Umblaseventil für die zweite Registerstufe kontinuierlich selbstregelnd ausgeführt. Dazu wird über eine im Umblaseventil nachgeschaltete Blende ein Steuerdruck eingestellt, so dass das Umblaseventil solange geöffnet steht, bis sich die durch die Blende eingestellte Druckdifferenz zwischen einem am Umblaseventil anstehenden Steuerdruck und einem Referenzdruck ausgleicht. Aufgrund der Selbstregelung des Umblaseventils kann eine andernfalls in der Motorsteuerung zu implementierende Elektronik sowie die dazu erforderliche Sensorik eingespart werden.

Die Funktionsweise des selbstschaltenden Umblaseventils erfolgt beispielsweise derart, dass zunächst beim Hochlauf des erfindungsgemäß vorgeschlagenen zweistufigen Registeraufladesystems im Bereich des Umblaseventils der Ladedruck anliegt, der ausschließlich von der ersten Registerstufe erzeugt wird. Das zunächst geschlossene Umblaseventil wird mit einem Ladedruck gegen eine Schließfeder aufgedrückt. Der Umluftweg zum Rezirkulieren der Ladeluft ist möglich. Bei Anlauf der zweiten Registerstufe entsteht zunächst auf der Saugseite des Verdichterteils der zweiten Registerstufe durch die Kalibrierung an der Blende eine Druckabsenkung. Wenn der Druck vor Verdichtereintritt des Verdichterteiles der zweiten Registerstufe in die Nähe des Atmosphärendruckniveaus gerät, was bedeutet, dass der Verdichterteil der zweiten Registerstufe ein annähernd gleiches Druckverhältnis aufweist wie der Verdichter der ersten Registerstufe, schließt das Umblaseventil mit Hilfe der Schließfeder selbsttätig, so dass ein Umblasen verhindert wird und der Verdichter der zweiten Registerstufe seinen Beitrag zur Verdichtung der dem Ladeluftkühler zuströmenden Frischluft leistet.

Des Weiteren kann der ersten Registerstufe der zweistufig ausgeführten Registeraufladeeinrichtung ein weiteres Umblaseventil zugeordnet sein, welches ein Verdichterpumpen des Verdichterteils der ersten Registerstufe verhindert, wenn bei nicht weit genug geöffneter Drosseleinrichtung bei einem schnellen Lastwechsel ein Wegfördern der vorverdichteten Frischluft nicht möglich ist. Die Steuerung des dem Verdichterteil der ersten Registerstufe zugeordneten weiteren Umblaseventil wird bevorzugt ebenfalls selbsttätig steuernd ausgeführt.

Zur Verbesserung des Stationärverhaltens können die beiden bevorzugt als Turbolader ausgebildeten Aufladeeinrichtungen der erfindungsgemäß vorgeschlagenen zweistufigen Aufladeeinrichtung hinsichtlich der Größe ihrer Turbinenteile unterschiedlich ausgelegt werden oder an mindestens einem Turbinenteil mit einer variablen Turbinengeometrie (VTG) ausgeführt werden.

### Zeichnung

Anhand der Zeichnung wird die Erfindung eingehender beschrieben. Es zeigt:
- Figur 1: ein Systemschaubild der erfindungsgemäß vorgeschlagenen zweistufigen Registeraufladung mit einem dem Turbinenteil der zweiten Registerstufe nachgeschalteten Turbinenzuschaltventil sowie einem vor der zweiten Registerstufe angeordneten Verdichterzuschaltventil und
- Figur 2: ein Systemschaubild einer zweistufig ausgeführten Registeraufladung mit einem dem Turbinenteil der zweiten Registerstufe nachgeschalteten Turbinenzuschaltventil sowie einem Verdichterzuschaltventil, das hinter dem Verdichterteil der zweiten Registerstufe angeordnet ist und
- Figur 3: ein Systemschaubild einer zweistufig ausgeführten Registeraufladung mit einem dem Turbinenteil der zweiten Registerstufe vorgeschalteten Turbinenzuschaltventil sowie einem vor der zweiten Registerstufe angeordneten Verdichterzuschaltventil und
- Figur 4: ein Systemschaubild einer zweistufig ausgeführten Registeraufladung mit einem dem Turbinenteil der zweiten Registerstufe vorgeschalteten Turbinenzuschaltventil, das jedoch hinter einer Abzweigleitung eines mit Wast-GateVentil versehenen Bypasskanals angeordnet ist, sowie einem vor der zweiten Registerstufe angeordneten Verdichterzuschaltventil.

### Ausführungsvarianten

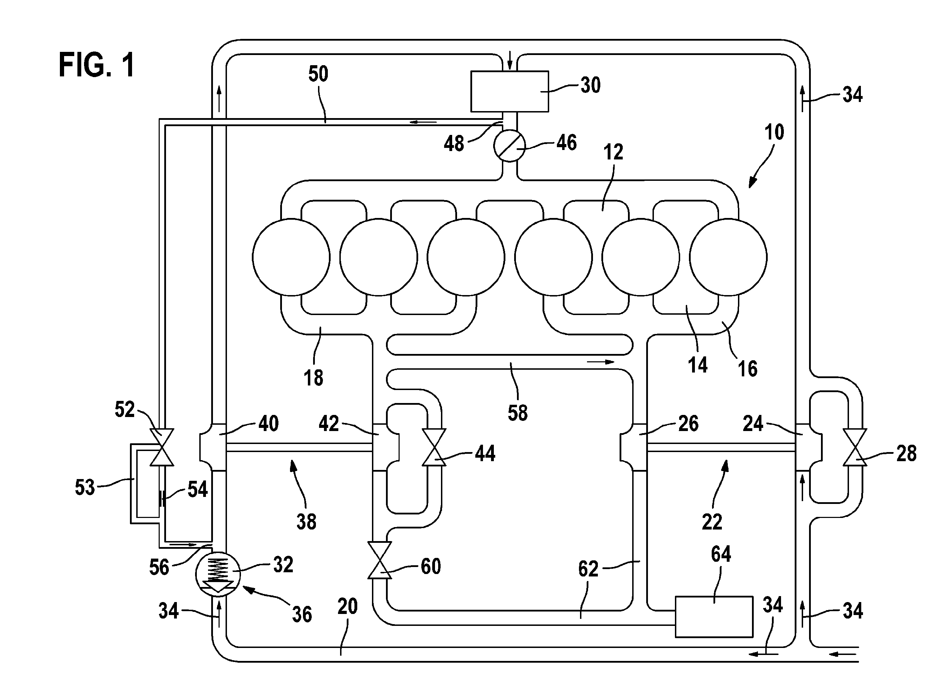

Figur 1 zeigt das Systemschaubild für ein erstes Ausführungsbeispiel der erfindungsgemäß vorgeschlagenen zweistufigen Registeraufladung mit Turbinenzuschaltventil und einem der zweiten Registerstufe vorgeschalteten Verdichterzuschaltventil sowie einem Umblaseventil.

Eine Verbrennungskraftmaschine 10 ist in der Darstellung gemäß Figur 1 durch sechs Zylinder angedeutet, wobei eine Einlassseite der Verbrennungskraftmaschine 10 durch Bezugszeichen 12 und deren Auslassseite durch Bezugszeichen 14 bezeichnet ist. An der Auslassseite 14 der Verbrennungskraftmaschine 10 befindet sich ein erstes Abgassammelrohr 16 sowie ein zweites Abgassammelrohr 18. Frischluft wird der Verbrennungskraftmaschine 10 über ein Ansaugrohr 20 zugeleitet, innerhalb dessen die Strömungsrichtung der Frischluft durch Bezugszeichen 34 bezeichnet ist. Im sich verzweigenden Ansaugrohr 20 sind ein erster Verdichterteil 24 einer ersten Registerstufe 22 sowie ein zweiter Verdichterteil 40 einer zweiten Registerstufe 38 aufgenommen. Die erste Registerstufe 22 und die zweite Registerstufe 38 bilden eine zweistufige Aufladeeinrichtung der Verbrennungskraftmaschine 10. Die erste und die zweite Registerstufe 22, 38 werden bevorzugt durch Abgasturbolader dargestellt, die neben dem bereits erwähnten ersten Verdichterteil 24 einen ersten Turbinenteil 26 in Bezug auf die erste Registerstufe 22 und in Bezug auf die zweite Registerstufe 38 neben dem bereits erwähnten zweiten Verdichterteil 40 einen zweiten Turbinenteil 42 umfassen. Die Verdichterteile 24 bzw. 40 sind beispielsweise über starre Wellen mit den zugehörigen Turbinenteilen 26, 42 der innerhalb der ersten Registerstufe 22 und innerhalb der zweiten Registerstufe 38 miteinander gekoppelt. Im Folgenden sind werden Ausdrücke nachgeschaltet und vorgeschaltet auf die Strömungsrichtung in der Frischluftleitung beziehungsweise auf die Strömungsrichtung in der Abgasleitung bezogen.

Die in Strömungsrichtung 34 der ersten Registerstufe 22 zuströmende Frischluft wird durch das erste Verdichterteil 24 vorverdichtet. Dem ersten Verdichterteil 24 ist ein als Verdichterbypass ein Umblaseventil 28 parallel geschaltet, über welchen der erste Verdichterteil 24 umgehbar ist. Nach Passage der ersten Verdichterstufe 24 strömt die vorverdichtete Frischluft in Strömungsrichtung 34 einem Ladeluftkühler 30 zu. Dem Ladeluftkühler 30 ist eine zum Beispiel als Drosselklappe ausgebildete Drosseleinrichtung 46 nachgeschaltet. Die Frischluft strömt des Weiteren über das Ansaugrohr 20 einem im Ansaugrohr 20 angeordneten federbelasteten Verdichterzuschaltventil 36 zu. Diesem ist in Strömungsrichtung 34 der Frischluft gesehen der zweite Verdichterteil 40 der zweiten Registerstufe 38 nachgeschaltet. Nach Passage des zweiten Verdichterteiles 40 strömt die im zweiten Verdichterteil 40 vorverdichtete Frischluft ebenfalls dem Ladeluftkühler 30 zu. Die zweite Registerstufe 38 wird nur dann aktiviert, wenn das dieser vorgeschaltete Verdichterzuschaltventil 36 geöffnet wird.

Dem Ladeluftkühler 30 nachgeschaltet und der Drosseleinrichtung 46 vorgeschaltet, befindet sich eine Entnahmestelle 48 zur Entnahme von Umblasluft. Die an der Entnahmestelle 48 entnommene Umblasluft wird über eine Zuleitung 50 einem Umblaseventil 52 zugeführt. Das Umblaseventil 52 wird in vorteilhafter Weise als selbsttätig schaltendes Ventil ausgeführt. Dem Umblaseventil 52 ist eine Blende 54 nachgeschaltet, ferner zweigt vom Umblaseventil 52 aus eine Leitung 53 ab, die hinter der Blende 54 in der Zuleitung 50 mündet. Der Leitungsabschnitt der Zuleitung 50, der sich an die Blende 54 anschließt und in den die Leitung 53 mündet, mündet seinerseits an einer Mündungsstelle 56 hinter dem Verdichterzuschaltventil 36 und vor dem Eintritt des zweiten Verdichterteils 40 der zweiten Registerstufe 38.

Während im Ausführungsbeispiel gemäß Figur 1 der das erste Abgassammelrohr 16 passierende Abgasstrom dem ersten Turbinenteil 26 der ersten Registerstufe 22 zugeführt wird, wird der im zweiten Abgassammelrohr 18 gesammelte Abgasmassenstrom über eine Verbindungsleitung 58 geleitet und kann dem ersten Turbinenteil 26 der ersten Registerstufe 22 zuströmen oder über ein diesem parallel geschaltetes optional vorgesehene Wastegate 44 oder das Turbinenteil 42 der zweiten Registerstufe einem Turbinenzuschaltventil 60 zuströmen. Den Abgasleitungen 62, die vor den Eintrittsseiten der jeweiligen Turbinenteile 26, 42 über die Verbindungsleitung 58 miteinander in Verbindung stehen, ist ein Katalysator 64 nachgeschaltet. Mit der in Figur 1 dargestellten Anordnung kann der im zweiten Abgassammelrohr 18 gesammelte Abgasmassenstrom auch um den zweiten Turbinenteil 42 herum geleitet werden. Ist das Turbinenzuschaltventil 60 geschlossen, kann durch diese Anordnung der gesamte Abgasmassenstrom, d.h. der im ersten Abgassammelrohr 16 und dem zweiten Abgassammelrohr 18 gesammelte Abgasmassenstrom unter Passage der Verbindungsleitung 58 über den ersten Turbinenteil 26 der ersten Registerstufe 22 geleitet werden. Das Turbinenzuschaltventil 60 ist in diesem Falle das einzige Stellglied, welches über die Motorsteuerung betätigt wird, da das Umblaseventil 52 und das Waste-Gate-Ventil 44 vorzugsweise selbsttätig schalten.

Durch die in Figur 1 dargestellte Anordnung des Verdichterzuschaltventiles 36 vor dem Eintritt des zweiten Verdichterteils 40 der zweiten Registerstufe 38 wird erreicht, dass die zweite Registerstufe 38 gegen Ölnebel abgedichtet ist, da der zweite Verdichterteil 40 der zweiten Registerstufe 38 stets unter der Ladedruckbeaufschlagung der ersten Verdichterstufe 26 der ersten Registerstufe 22 arbeitet. Es entsteht kein Unterdruck, der Ölnebel aus dem Gehäuse der zweiten Registerstufe in die zum Ladeluftkühler 30 führende Leitung saugen würde.

Das Umblaseventil 52, welches hinter dem Ladeluftkühler 30 Umblasluft abnimmt und hinter dem Verdichterzuschaltventil 36 vor dem Verdichtereintritt in den zweiten Verdichterteil 40 wieder zuführt, ist vorzugsweise als selbsttätig arbeitendes Umblaseventil ausgebildet. Dieses arbeitet, ohne dass ein Eingriff über die Motorsteuerung notwendig wäre. Das Umblaseventil 52 dient zur Vermeidung des Betriebsbereiches, indem ein Verdichter pumpt, für den Fall, dass dieser außerhalb seines Kennfeldbereiches oberhalb der Pumpgrenze betrieben werden sollte. Ein Betrieb des zweiten Verdichterteiles 40 im Bereich der Pumpgrenze könnte für den Fall auftreten, dass nach der ersten Registerstufe 22 beim Öffnen des Turbinenzuschaltventiles 60 der langsam sich zuschaltende zweite Turbinenteil 42 die Förderung des Luftmassenstromes aufnimmt, dieser aber noch nicht in die Verbrennungskraftmaschine 10 gefördert werden kann, da der erste Verdichterteil 24 mit dem erzeugten Ladedruck dagegen arbeitet und das Verdichterzuschaltventil 36 noch nicht automatisch öffnen konnte. Für diesen Fall, d.h. das Vermeiden der Pumpgrenze, sollte die umzublasende Ladeluft in vorteilhafter Weise gekühlt hinter dem Ladeluftkühler 30 entnommen werden und über das Umblaseventil 52 an der Verbindungsstelle vor dem zweiten Verdichterteil 40 der zweiten Registerstufe 38 wieder eingespeist werden. In diesem Falle fördert der zweite Verdichterteil 40 im Kreis, der durch den Ladeluftkühler 30, die Zuleitung 50, das Umblasventil 52, die Blende 54 und die Einspeisungsstelle 56 sowie den zweiten Verdichterteil 40 gegeben ist.

In vorteilhafter Weise wird die Steuerung des selbsttätig schaltenden Umblaseventiles 52 für den zweiten Verdichterteil 40 der zweiten Registerstufe 38 kontinuierlich selbstregelnd ausgeführt. Dazu kann der notwendige Steuerdruck p_{Steuer} für das Umblaseventil über die Blende 54 erzeugt werden. Durch die Ausführung des Umblaseventiles 52 als selbsttätig schaltendes Umblaseventil kann dessen Kontrolle über eine Motorsteuerung die dazu erforderliche Sensorik und die dazu erforderliche Auswerteelektronik innerhalb des Motorsteuergerätes in vorteilhafter Weise eingespart werden.

Bei der in Figur 1 dargestellten Ausführungsvariante der zweistufigen Registeraufladung stellt sich die Funktionsweise des selbsttätig schaltenden Umblaseventiles 52 wie folgt dar. Beim Hochlauf des zweistufig ausgebildeten Registeraufladesystems liegt zunächst im Bereich des Umblaseventiles 52 der Ladedruck p₂ an, der ausschließlich von der ersten Registerstufe 22 erzeugt wird. Das zunächst geschlossen stehende Umblaseventil 52 wird mit dem Ladedruck p₂ beaufschlagt, der gegen eine Schließfeder wirkt und diese langsam aufdrückt, so dass ein Umluftweg zur Rezirkulation der Umblaseluft geöffnet wird, ohne Aktivierung durch die Motorsteuerung der Verbrennungskraftmaschine 10. Der zweite Verdichterteil 40 und das Umblaseventil 52 befinden sich auf Ladedruckniveau p₂. Bei Anlauf der zweiten Registerstufe 38 entsteht zunächst auf der Saugseite des zweiten Verdichterteiles 40 und damit an der Mündungsstelle 56 aufgrund der Kalibrierungswirkung der Blende 54 eine Druckabsenkung, deren Höhe von der Leistung des Verdichterteils 40 und von der Blende 54 abhängt. Erreicht der Druck vor dem Eintritt des zweiten Verdichterteiles 40 schließlich Atmosphärendruckniveau pₐₜₘ, so liegt dieser Druck als Steuerdruck pₛₜₑᵤₑᵣ auch an dem Umblaseventil an. Aufgrund der Druckdifferenz zwischen dem auf Atmosphärendruck bzw. Umgebungsdruck befindlichen Steuerdruck und dem als Referenzdruck verwandten Ladeluftdruck wird das Umblaseventil 52 mit Hilfe der Schließfeder geschlossen. In diesem Zustand hat der zweite Verdichterteil 40 ein vergleichbares Druckniveau wie der erste Verdichterteil 26. Da das Umblasen verhindert wird, vermag der zweite Verdichterteil 40 seine Verdichterwirkung zu entfalten und das Verdichterzuschaltventil 32 öffnet.

Ein weiteres Umblaseventil 28, vorstehend als Verdichterbypass bezeichnet, kann dem ersten Verdichterteil 24 parallel geschaltet sein. Das weitere Umblasventil 28 wird zur Verhinderung des Pumpbetriebs des ersten Verdichterteiles 24 dann wirksam, wenn die nicht weit genug offen stehende Drosseleinrichtung 46 bei einem schnellen Lastwechsel ein Wegfördern der vorverdichteten Ladeluft verhindert. Die Steuerung des weiteren Umblasventiles, d.h. des Verdichterbypasses 28 wird bevorzugt ebenfalls selbsttätig steuernd ausgebildet, so zum Beispiel über den im Ansaugrohr 20 herrschenden Druck.

Das Hochlaufen der ersten Registerstufe 22 mit dem ersten Verdichterteil 24 und dem ersten Turbinenteil 26 erfolgt bei zunächst geschlossenem Verdichterbypass 28 bei geschlossenem Wastegate 44 und bei geschlossenem Turbinenzuschaltventil 60. Abgas tritt aus dem zweiten Abgassammelrohr 18 in die Verbindungsleitung 58 ein und wirkt auf den ersten Turbinenteil 26 und treibt somit den ersten Verdichterteil 24 an. Vom ersten Turbinenteil 26 strömt das Abgas über die Abgasleitung 62 dem Katalysator 64 zu. Der zweite Verdichterteil 40 und das Umblaseventil 52 befinden sich auf Ladedruckniveau p₂. Das Umblaseventil 52 steht offen; Ladedruckniveau herrscht ebenfalls in der Zuleitung 50, der Leitung 53 und im Bereich der Blende 54 sowie an der Mündungsstelle 56. Die Ladedruckregelung erfolgt in dieser Phase bei inaktiver zweiter Registerstufe allein mittels des Turbinenzuschaltventils 60, welches mit der Motorsteuerung der Verbrennungskraftmaschine 10 in Verbindung steht.

Das Zuschalten der zweiten Registerstufe 38 mit dem zweiten Verdichterteil 40 und dem zweiten Turbinenteil 42 erfolgt durch langsames Öffnen des Turbinenzuschaltventils 60. Bei dessen Öffnen wird Überschussenergie vom ersten Turbinenteil 26 über die Verbindungsleitung 58 und das zweite Abgassammelrohr 18 auf den zweiten Turbinenteil 42 geleitet. Durch Hochlaufen der zweiten Registerstufe 38 beginnt der zweite Verdichterteil 40 umzupumpen und über die Entnahmestelle 48, die Zuleitung 50, das Umblaseventil 52, die Blende 54, die Mündungsstelle 56 verdichtete Frischluft dem Ladeluftkühler 30 zuzuführen. Dadurch senkt sich der Druck nach der Blende 54 vor dem Eintritt des zweiten Verdichterteils 40 von p₂, d.h. Ladedruck auf Umgebungsdruck ab. Sobald in der Leitung 53 Umgebungsdruck erreicht ist, schließt das Umblaseventil 52 und das Verdichterzuschaltventil 32 öffnet. Der zweite Verdichterteil 40 unterliegt jetzt dem gleichen Druckniveau wie der erste Verdichterteil 24 der ersten Registerstufe 22. Damit fördert die zweite Registerstufe 38 über das Verdichterzuschaltventil 32 verdichtete Frischluft zum Ladeluftkühler 30. In diesem Zustand ist das Turbinenzuschaltventil 60 vollständig geöffnet, so dass weitere Registerstufen 22, 38 im Verhältnis von bis zu 50 : 50 fördern, je nach Auslegung der Abgasturbolader. In diesem Betriebszustand erfolgt die Regelung des Ladedrucks p₂ über das selbsttätig schaltende Waste-Gate-Ventil 44.

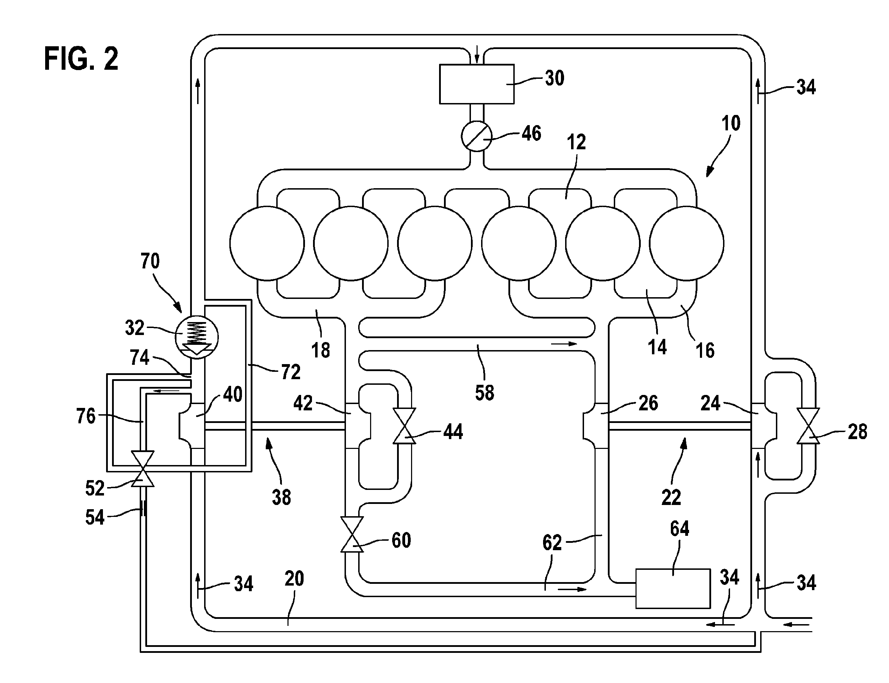

Der Darstellung gemäß Figur 2 ist eine weitere Ausführungsvariante des erfindungsgemäß vorgeschlagenen, zweistufig ausgelegten Registeraufladesystems zu entnehmen.

Im Unterschied zur in Figur 1 dargestellten Ausführungsvariante der zweistufig ausgebildeten Registeraufladung ist gemäß dieser das selbsttätig schaltende Verdichterzuschaltventil 32 nicht - wie in Figur 1 in einer ersten Position 36 vor dem zweiten Verdichterteil 40 liegend angeordnet - sondern in einer zweiten Position 70 dem zweiten Verdichterteil 40 nachgeschaltet, also in Strömungsrichtung hinter dem zweiten Verdichterteil 40 angeordnet. Die Zuleitung 50 zur Entnahme von Umblasluft hinter dem Ladeluftkühler 30 ist im Vergleich zur in Figur 1 dargestellten Ausführungsvariante entfallen. Der Druck hinter dem Verdichterzuschaltventil 32 wird über eine Entnahmeleitung 72 als Referenzdruck abgegriffen und dem Umblaseventil 52 zugeführt. Ist nur die erste Registerstufe aktiv, so wird über die Entnahmeleitung 72 der Ladedruck der ersten Registerstufe als Referenzdruck dem Umblaseventil 52 zugeführt. Beim Öffnen des Turbinenzuschaltventil 60 und bei noch geschlossenem Verdichterzuschaltventil beginnt der Verdichter 40 Luft zu fördern, die bei geöffnetem Umblaseventil 76 über die Entnahmeleitung 72 und die Blende 54 in das Ansaugrohr zurückgeführt wird. Durch das Umblasen der Luft über die Zuleitung 76, das Umblaseventil 52 sowie die Blende 54 und das Ansaugrohr 20 in Strömungsrichtung 34 steigt der Druck nach dem zweiten Verdichterteil 40 langsam an. Über eine Mündungsstelle 74 hinter dem Verdichterteil 40 ist eine Steuerdruckleitung mit dem Umblaseventil verbunden. Da der Verdichterteil gegen die Blende pumpt, steigt der Steuerruck p_{Steuer} auch in der Steuerdruckleitung ausgehend vom Umgebungsdruck pₐₜₘ langsam an. Im Umblaseventil 52 wird der über die Entnahmeleitung 72 als Referenzdruck anliegende Ladedruck hinter dem Verdichterzuschaltventil 32 mit dem über die Mündungsstelle 74 anliegenden Steuerdruck p_{Steuer} verglichen, wobei bei festgestellter Druckgleichheit der vorgehend genannten Drücke eine Feder das Umblaseventil 52 schließt und das Verdichterzuschaltventil 32 geöffnet wird.

In vorteilhafter Weise wird in diesem Ausführungsbeispiel der Figur 2 für die Steuerung und Regelung des Ladedrucks im Gesamtsystem hauptsächlich das Turbinenzuschaltventil 60 eingesetzt. Dieses stellt das Stellglied dar, welches noch über die Motorsteuerung bedient werden müsste, während sowohl das Verdichterzuschaltventil 32 als auch das Umblasventil 52 als selbsttätig schaltende Ventile ausgeführt werden können, die daher keine Ansteuerung über die Motorsteuerung bedürfen. Je nach Auslegung und Anordnung des zweiten Turbinenteils 42 der zweiten Registerstufe 38, kann auch das Wastegate 44 selbstgeregelt über den Ladedruck oder selbstgeregelt über den Abgasgegendruck betätigt werden. Ist das dem zweiten Turbinenteil 42 parallel geschaltete Wastegate 44 ein selbstgeregeltes, ist für die Ladedruckregelung auch in dieser Ausführungsvariante ein Stellglied, nämlich das Turbinenzuschaltventil 60 über die Motorsteuerung zu bedienen.

Zur Verbesserung des Instationärverhaltens des dargestellten Aufladesystems können beide Turbinenteile 26 bzw. 42 der beiden Registerstufen 22 und 38 hinsichtlich ihrer Turbinengröße unterschiedlich ausgelegt werden bzw. mit mindestens einer der beiden Turbinenteile 26, 42 mit einer variablen Turbinengeometrie ausgestattet werden. Damit lässt sich das Hochlaufverhalten erheblich verbessern und zum Beispiel beginnend in der ersten Registerstufe 22 ein schnellerer Hochlauf der Turbinenteile zur Erzeugung eines schnelleren Ladedruckaufbaus erzielen. In diesem Falle, d.h. bei Einsatz von variablen Turbinengeometrien (VTG), können je nach Auslegung die Wastegates beziehungsweise Waste-Gate-Ventile entfallen.

Auslegungsabhängig ist das Waste-Gate-Ventil 44 über die Motorsteuerung der Verbrennungskraftmaschine 10 betätigbar oder öffnet bzw. schließt selbsttätig. Ist das Waste-Gate-Ventil 44 über die Motorsteuerung und der Verbrennungskraftmaschine 10 betätigbar, erfolgt die Steuerung des Gesamtsystems "zweistufige Registeraufladung" über das ebenfalls mit der Motorsteuerung der Verbrennungskraftmaschine 10 in Verbindung stehende Turbinenzuschaltventil 60 und das Waste-Gate-Ventil 44. Wenn das Waste-Gate-Ventil 44 selbsttätig arbeitet, erfolgt die Regelung des Ladedruckes auf der ersten Registerstufe 22 über das Turbinenzuschaltventil 60 und in der zweiten Registerstufe 38 über das selbsttätig arbeitende Waste-Gate-Ventil 44, welches keinen Steller benötigt. Demnach verbleibt als einziges anzusteuerndes Stellglied zur Regelung der ersten und der zweiten Registerstufe 22, 38 mit der erfindungsgemäß vorgeschlagenen Lösung das Turbinenzuschaltventil 60.

Die erfindungsgemäß vorgeschlagene Lösung lässt sich dahingehend erweitern, dass durch Einbringen einer Schließklappe in die Verbindungsleitung 58 und durch Integration eines zusätzlichen Waste-Gates, welches dem ersten Turbinenteil 26 zuzuordnen wäre, eine Flutentrennung erreicht werden kann, die gasdynamische Vorteile im Rahmen einer stoßweise erfolgenden Aufladung der Verbrennungskraftmaschine mit sich bringt. Mit dem Vorsehen einer Schließklappe in der Leitung 58 ist eine Flutentrennung erreichbar bei jeweils im Falle einer sechszylindrigen Verbrennungskraftmaschine drei Zylinder pro Flut zusammengefasst wären.

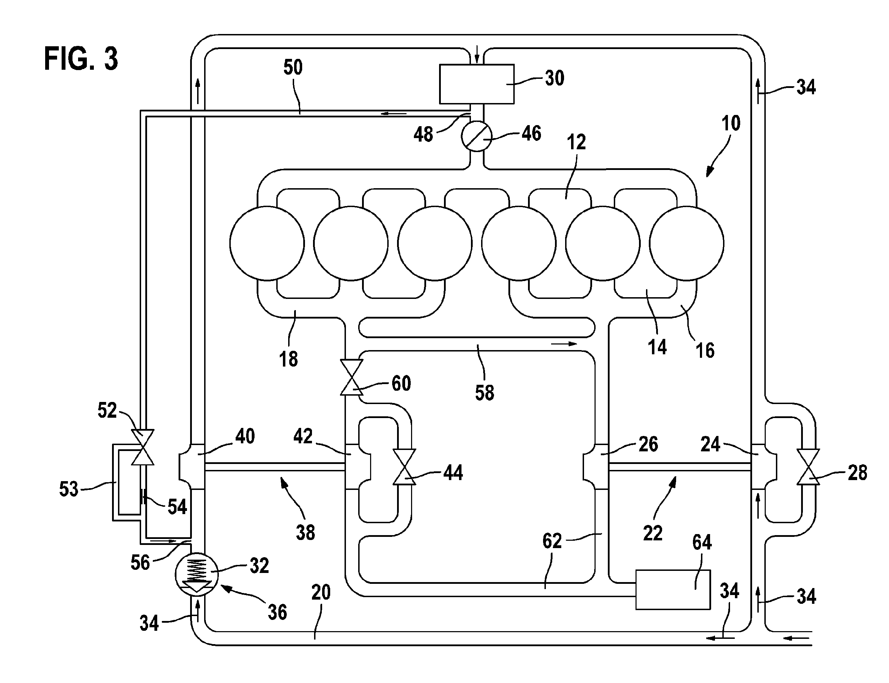

Ein weiteres Ausführungsbeispiel der Erfindung ist in Figur 3 dargestellt. Dieses Ausführungsbeispiel unterscheidet sich von dem in Figur 1 dargestellten Ausführungsbeispiel durch die Anordnung des Turbinenzuschaltventils 60, welches nicht hinter dem Turbinenteil 42 der zweiten Registerstufe 38 wie bei den Ausführungsbeispielen in Figur 1 und Figur 2, sondern vor dem Turbinenteil 42 angeordnet ist. Wie in Figur 3 zu erkennen ist, zweigt eine parallel zum Turbinenteil 42 geschaltete Bypassleitung, in welcher das Waste-Gate-Ventil 44 angeordnet ist, erst hinter dem Turbinenzuschaltventil 60 ab. Das Waste-Gate-Ventil 44 ist auch in diesem Ausführungsbeispiel vorzugsweise selbsttätig schaltend ausgebildet. Mittels des Turbinenzuschaltventils 60 lässt sich im Betrieb der ersten Registerstufe ein relativ hoher Ladedruck einstellen, der sich unabhängig von dem selbsttätig schaltenden Waste-Gate-Ventil einstellen lässt. Die Ladedruckregelung der ersten Registerstufe 22 erfolgt über das Turbinenzuschaltventil 60. Bei völlig geöffnetem Turbinenzuschaltventil 60 und über das Umblaseventil 52 zugeschalteter zweiter Registerstufe 38 erfolgt die Ladedruckregelung des Gesamtsystems über das vorzugsweise selbsttätig schaltende Waste-Gate-Ventil 44.

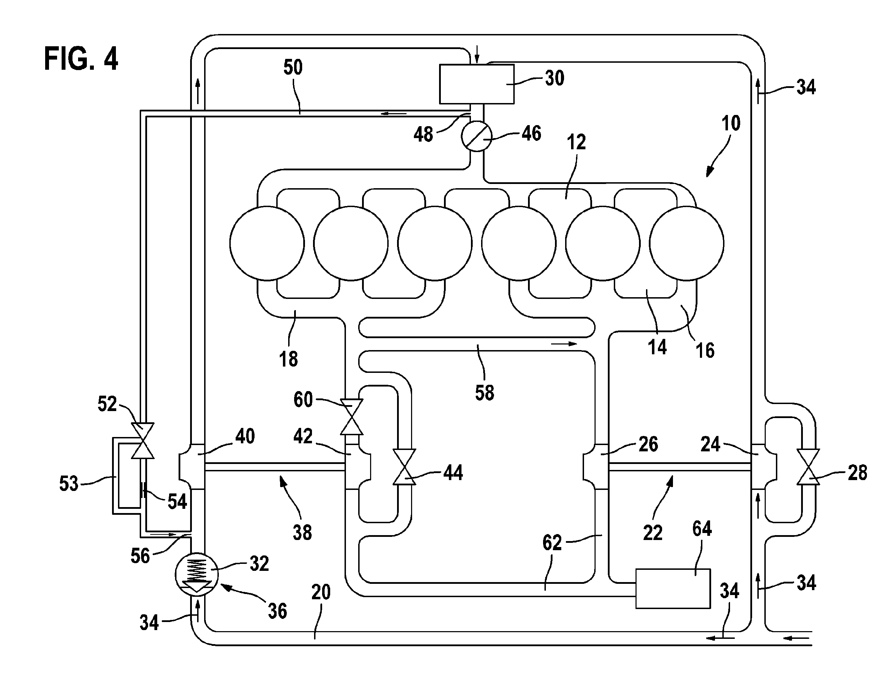

Figur 4 zeigt ein Ausführungsbeispiel, bei dem das Turbinenzuschaltventil 60 vor dem Turbinenteil 42 der zweiten Registerstufe angeordnet ist, jedoch hinter einer Abzweigung einer mit dem Waste-Gate-Ventil 44 versehenen Bypassleitung. In diesem Ausführungsbeispiel wird ein von der Motorsteuerung angesteuertes Waste-Gate-Ventil 44 verwendet.

Natürlich sind auch weitere Ausführungsbeispiele möglich, welche beispielsweise die in Figur 2 gezeigte Anordnung des Umblaseventils 52 und des Verdichterzuschaltventils 32 hinter dem Verdichterteil 40 der zweiten Registerstufe kombinieren mit der in Figur 3 oder Figur 4 gezeigten Anordnung des Turbinenzuschaltventils 60 vor dem Turbinenteil 42 der zweiten Registerstufe.

## Patentansprüche

1. Registeraufladeeinrichtung zur Aufladung einer Verbrennungskraftmaschine (10) mit einer ersten Registerstufe (22) mit einem ersten Verdichterteil (24) und einem ersten Turbinenteil (26) und einer zweiten Registerstufe (38) mit einem zweiten Verdichterteil (40) und einem zweiten Turbinenteil (42) und mit einem der zweiten Registerstufe (38) zugeordneten Verdichterzuschaltventil (32) und einem dem zweiten Turbinenteil (42) zugeordneten Turbinenzuschaltventil (60), **dadurch gekennzeichnet, dass** dem Verdichterteil (40) der zweiten Registerstufe (38) ein selbsttätig schaltendes Umblaseventil (52) parallel geschaltet ist und/oder dass dem Turbinenteil (42) der zweiten Registerstufe (38) ein selbsttätig schaltendes Waste-Gate-Ventil (44) parallel geschaltet ist.

2. Registeraufladeeinrichtung gemäß Anspruch 1, **dadurch gekennzeichnet, dass** im Betrieb nur der ersten Registerstufe (22) bei geschlossenem Verdichterzuschaltventil (36) über das Turbinenzuschaltventil (60) eine Ladedruckregelung in der ersten Registerstufe (22) erfolgt.

3. Registeraufladeeinrichtung gemäß Anspruch 1, **dadurch gekennzeichnet, dass** das Verdichterzuschaltventil (32) als federbeaufschlagtes, druckabhängig schaltendes Ventil ausgeführt ist, welches entweder vor dem Eintritt des zweiten Verdichterteiles (40) angeordnet oder diesem nachgeschaltet ist.

4. Registeraufladeeinrichtung gemäß Anspruch 1, **dadurch gekennzeichnet, dass** dem Umblaseventil (52) ein Strömungswiderstand (54) nachgeordnet ist, über den eine Druckdifferenz zwischen einem am Umblaseventil (52) anliegenden Steuerdruck (p_{Steuer}) und einem Referenzdruck erzeugbar ist.

5. Registeraufladeeinrichtung gemäß Anspruch 4, **dadurch gekennzeichnet, dass** der Strömungswiderstand (54) als Blende ausgeführt ist.

6. Registeraufladeeinrichtung gemäß Anspruch 1, **dadurch gekennzeichnet, dass** der Registeraufladeeinrichtung einlassseitig mindestens ein Ladeluftkühler (30) vorgeschaltet ist und das Verdichterzuschaltventil (32) in einer ersten Position (36) vor dem zweiten Verdichterteil (40) angeordnet ist und dass das Umblaseventil (52) über eine nach dem Ladeluftkühler (30) abzweigende Zuleitung (50) mit Umblaseluft beaufschlagt ist und die Umblaseluft in Strömungsrichtung (34) hinter dem Verdichterzuschaltventil (32) wieder eingespeist wird. (Fig. 1)

7. Registeraufladeeinrichtung gemäß Anspruch 1, **dadurch gekennzeichnet, dass** das Verdichterzuschaltventil (32) in einer zweiten Position (70) hinter dem zweiten Verdichterteil (40) angeordnet ist und dass das Umblaseventil (52) über eine hinter dem Verdichterzuschaltventil (32) abzweigende Entnahmeleitung (76) beaufschlagt ist und die Umblaseluft in Strömungsrichtung (34) vor dem Eintritt des zweiten Verdichterteils (40) wieder eingespeist wird. (Fig. 2)

8. Registeraufladeeinrichtung gemäß Anspruch 7, **dadurch gekennzeichnet, dass** die Umblaseluft durch das Umblaseventil (52) und die Blende (54) als Umluft in ein zum zweiten Verdichterteil (40) führendes Ansaugrohr (20) an einer Stelle eingeblasen wird, an der das Ansaugrohr (20) zum ersten Verdichterteil (24) abzweigt.

9. Registeraufladeeinrichtung gemäß Anspruch 1, **dadurch gekennzeichnet, dass** bei geschlossenem Turbinenzuschaltventil (60) der aus einem ersten Abgassammelrohr (16) und einem zweiten Abgassammelrohr (18) austretende Abgasmassenstrom über eine Verbindungsleitung (58) auf den ersten Turbinenteil (26) der ersten Registerstufe (22) geleitet wird.

10. Registeraufladeeinrichtung gemäß Anspruch 1, **dadurch gekennzeichnet, dass** das erste Turbinenteil (26) und/oder das zweite Turbinenteil (42) mit variabler Turbinengeometrie ausgeführt sind.

11. Registeraufladeeinrichtung gemäß Anspruch 1, **dadurch gekennzeichnet, dass** dem ersten Verdichterteil (24) ein weiteres Umblaseventil (28) als Verdichterbypass parallel geschaltet ist.
